# FASCICULE DE BREVET EUROPEEN

(11) **EP 4 215 426 B1**
(45) Date de publication et mention de la délivrance du brevet: **18.06.2025**
(21) Numéro de dépôt: 23151746.7
(22) Date de dépôt: 16.01.2023
(51) Int. Cl.: B61C 17/00, H02G 3/04, H02G 3/00

(54) **CHEMIN DE CÂBLE(S) POUR UN VÉHICULE, ENSEMBLE COMPRENANT UN CHEMIN DE CÂBLE(S) ASSOCIÉ**
KABELKANAL FÜR EIN FAHRZEUG, ANORDNUNG MIT EINEM ZUGEHÖRIGEN KABELKANAL
CABLE TRAY FOR A VEHICLE, ASSEMBLY COMPRISING AN ASSOCIATED CABLE TRAY

(30) Priorité: 19.01.2022 FR 2200448
(43) Date de publication de la demande: 26.07.2023
(73) Titulaire: SpeedInnov, 75008 Paris (FR)
(72) Inventeur: PLUMERE, Laurence, 90700 Châtenois les Forges (FR); FUHRMANN, Renaud, 90800 Bavilliers (FR); JOHNSON, George-william, 90300 Valdoie (FR)
(74) Mandataire: Plasseraud IP

(56) Documents cités:
- EP-A1- 3 854 652
- EP-B1- 3 239 013
- CN-A- 112 448 340
- US-A1- 2015 276 092

## Description

La présente invention concerne un chemin de câble(s) pour un véhicule.

La présente invention concerne également un ensemble comprenant un chemin de câble(s), un support et au moins un dispositif de fixation du chemin de câble(s) sur le support.

On connaît déjà, dans l'état de la technique, un ensemble comprenant un chemin de câble(s), un support et au moins un dispositif de fixation du chemin de câble(s) sur le support. Plus spécifiquement, dans le cadre de véhicule ferroviaire, le support est par exemple un plancher d'une cabine machine du véhicule et le chemin de câble(s) est fixé sur le support à l'aide du dispositif de fixation. Des câbles électriques circulent entre le support et le chemin de câble(s).

On connait également de CN 112 448 340 A et EP 3 854 652 A1 des ensemble comprenant un chemin de câble(s).

Afin de garantir la sécurité d'opérateur(s) intervenant dans la cabine machine du véhicule ferroviaire, il est requis que chaque élément métallique soit maintenu au potentiel de la terre, et notamment le chemin de câble(s) et le support. Cependant, dans l'état de la technique, le chemin de câble(s) est réalisé en aluminium alors que le support est réalisé en acier inoxydable. Or, lorsque ces deux matériaux sont mis en contact la conduction électrique entre eux est sensiblement mauvaise. Ainsi, une différence de potentiel est susceptible d'apparaître entre le chemin de câble(s) et le support.

Pour éviter l'apparition d'une telle différence de potentiel, une tresse de mise à la terre en cuivre (de l'anglais, *copper earthing braid*) est agencée à la fois en contact avec le chemin de câble(s) et le support. L'aluminium et l'acier inoxydable ayant respectivement une bonne conductivité avec le cuivre, la tresse de mise à la terre garantit ainsi que chacun du chemin de câble(s) et du support soit au potentiel de la terre. En effet, si une différence de potentiel apparaissait entre le chemin de câble(s) et le support, un courant traverserait la tresse afin de rétablir un potentiel égal entre le chemin de câble(s) et le support.

Toutefois, la tresse de mise à la terre est un élément en cuivre apparent dans un couloir de la cabine machine. Aussi, la tresse est facilement accessible pour un tiers dans la cabine machine. Ainsi, et compte tenu du cours du cuivre sur le marché, les tresses sont régulièrement volées pour la revente de matières premières. Ceci conduit donc à une augmentation du nombre d'opérations de maintenances à effectuer sur le véhicule ferroviaire puisque ces tresses volées doivent être remplacées afin de garantir la sécurité d'opérateur(s) intervenant dans la cabine machine.

L'invention a pour but de fournit un ensemble selon la revendication 1.

Grâce à la composition du revêtement du chemin de câble(s) la conductivité entre ledit chemin de câble(s) et le support est améliorée. Il n'est donc plus nécessaire d'avoir recours à une tresse de mise à la terre pour obtenir des potentiels égaux entre le chemin de câble(s) et le support.

En complément facultatif, l'ensemble est selon l'une quelconque des revendications 2 à 8.

Différentes caractéristiques et avantages de l'invention seront mis en lumière à la lecture de la description qui va suivre, donnée uniquement à titre d'exemple non limitatif et faite en référence aux dessins annexés, sur lesquels :
[Fig. 1] la figure 1 est une vue en coupe d'un ensemble selon l'invention ;
[Fig. 2] la figure 2 est une vue de dessus d'un chemin de câble(s) électrique(s) compris dans l'ensemble de la figure 1.

Dans la présente description, l'expression « sensiblement égal(e) » est entendue au sens d'une égalité à plus ou moins 10%, et préférentiellement d'une égalité à plus ou moins 5%.

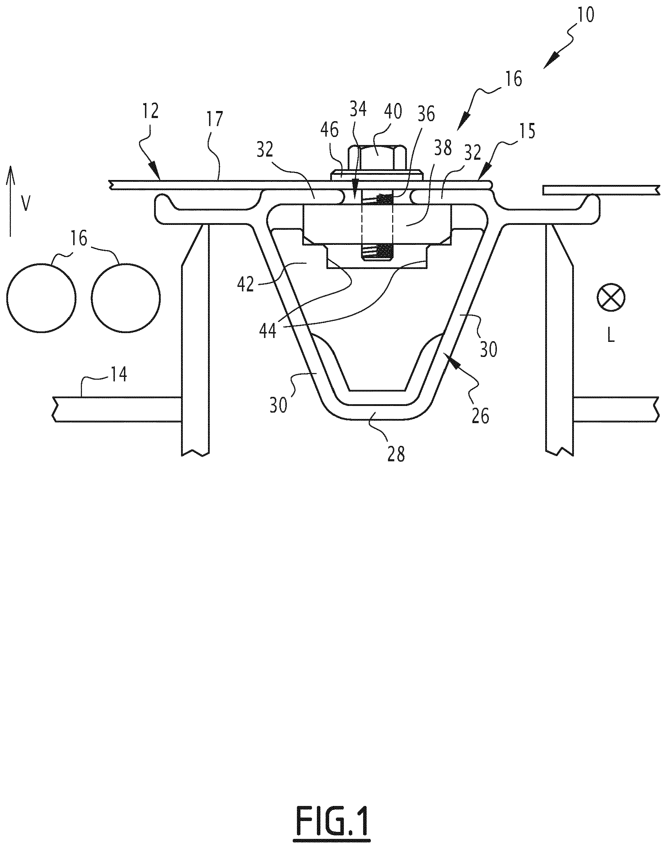

On a représenté, sur la figure 1, un ensemble 10 comprenant un chemin de câble(s) 12, un support 14, et au moins un dispositif de fixation 15 du chemin de câble(s) 12 sur le support 14.

L'ensemble 10 est par exemple intégré dans un véhicule, notamment ferroviaire. Plus spécifiquement, l'ensemble 10 est par exemple intégré dans une cabine machine d'un véhicule ferroviaire. Des câbles électriques 16 circulent alors entre le support 14 et le chemin de câble(s) 12. A titre d'exemple, le support 14 est un plancher de la cabine machine du véhicule ferroviaire sur lequel circulent les câbles 16, et le chemin de câble(s) 12 est fixé sur le support 14 afin de protéger les câbles 16. Dans cet exemple qui sera considéré ci-après, le chemin de câble(s) 12 est fixé, sur le support 14, selon une direction verticale V perpendiculaire au plan définit par le plancher du véhicule ferroviaire.

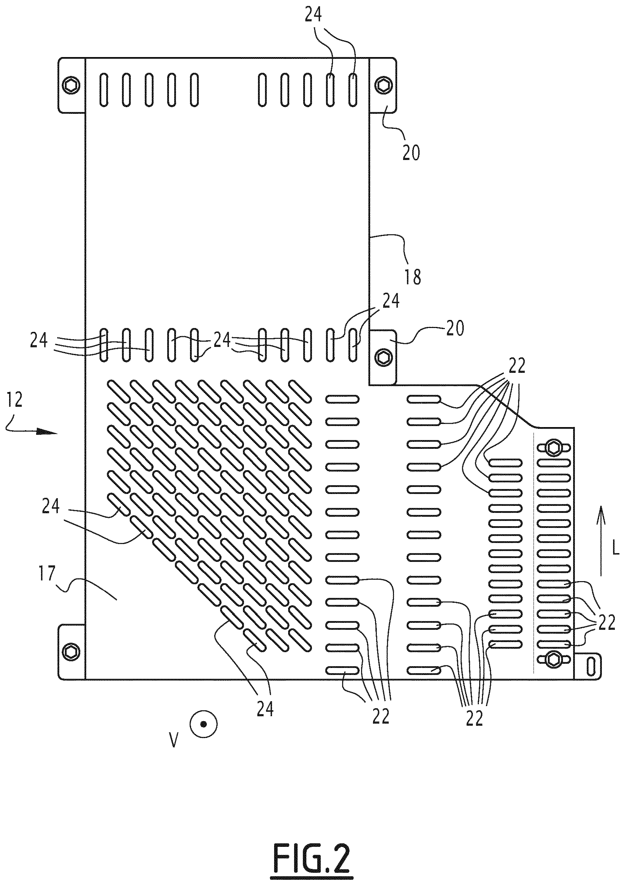

Le chemin de câble(s) 12 présente préférentiellement l'aspect d'une coque propre à couvrir le support 14. Sur l'exemple de la figure 2, le chemin de câble(s) 12 définit sensiblement une forme en L orientée selon une direction longitudinale L, perpendiculaire à la direction verticale V. Le chemin de câble(s) 12 définit une face de fond 17 sensiblement plate. La face de fond 17 est sensiblement perpendiculaire à la direction verticale V lorsque le chemin de câble(s) 12 est fixé sur le support 14.

Comme indiqué précédemment, le chemin de câble(s) 12 permet de protéger les câbles électriques 16 circulant sur le support 14. Pour permettre l'accès au(x) câble(s) 16, par exemple lors d'une opération de maintenance, le chemin de câble(s) 12 est mobile par rapport au support 14 entre une position fixée dans laquelle le chemin de câble(s) 12 est fixé au support 14 par le dispositif de fixation 15, et une position écartée dans laquelle le chemin de câble(s) 12 est écarté du support 14.

En position fixée du chemin de câble(s) 12, le chemin de câble(s) 12 et le support 14 sont en contact. Ceci sera explicité par la suite.

Optionnellement, le chemin de câble(s) 12 définit au moins un bord 18 s'étendant verticalement depuis une extrémité du fond 17 du chemin de câble(s) 12 vers le support 14 en position fixée du chemin de câble(s) 12. Le chemin de câble(s) 12 comprend alors en outre au moins un rebord 20 faisant saillie par rapport au bord 18. Le rebord 20 s'étend parallèlement à la face de fond 17 du chemin de câble(s) 12. Préférentiellement, le chemin de câble(s) 12 comprend plusieurs bords 18 et plusieurs rebords 20. Chaque rebord 20 est par exemple percé pour le passage d'une vis.

En complément facultatif, le chemin de câble(s) 12 comprend également au moins un orifice 22 sur sa face de fond 17. Chaque orifice 22 a préférentiellement une forme oblongue, avantageusement orientée perpendiculairement à la direction longitudinale L. Les orifices 22 sont par exemple alignés selon la direction longitudinale L. Les orifices 22 sont destinés à recevoir, au moins partiellement, le dispositif de fixation 15, comme il sera décrit ci-après.

Le chemin de câble(s) 12 comprend optionnellement une pluralité de trous 24. Les trous 24 sont préférentiellement de forme oblong et agencés en ligne. Contrairement aux orifices 22, les trous 24 s'étendent principale selon leur direction d'alignement.

En référence à la figure 2, certains des trous 24 sont préférentiellement agencés selon des lignes parallèles s'étendant selon la direction longitudinale L. D'autres trous 24 sont par exemple agencés en lignes parallèles selon une direction formant un angle avec la direction longitudinale L. L'angle est par exemple égal à 45°.

Le chemin de câble(s) 12 est propre à être fixé au support 14 pour conduire un ensemble de câble(s) électrique(s) 16 entre le support 14 et le chemin de câble(s) 12. Le chemin de câble(s) 12 comporte un revêtement en un alliage comprenant du zinc, de l'aluminium et du magnésium.

Optionnellement, ledit alliage comprend un pourcentage massique de zinc supérieur à 90%, un pourcentage massique d'aluminium compris entre 1% et 5%, et un pourcentage massique de magnésium compris entre 1% et 5%. A titre d'exemple, l'alliage est composé de sensiblement 93,5% de zinc, de 3,5% d'aluminium, de 3% de magnésium et d'impuretés inévitables. Un tel alliage est alors connu sous le nom de Magnelis^{®} notamment commercialisé par l'entreprise ARCELOR MITTAL.

Avantageusement, le chemin de câble(s) 12 est intégralement en l'alliage précité.

Le support 14 est par exemple un plancher d'une cabine machine du véhicule ferroviaire, destiné à recevoir les câbles électriques 16. Le support 14 est optionnellement en acier inoxydable. On entend par acier inoxydable un alliage à base de fer comprenant un pourcentage massique de carbone inférieur à 1.2% et un pourcentage massique de chrome supérieur à 10.5%, ainsi que des impuretés inévitables.

Le support 14 définit une glissière 26 s'étendant selon la direction longitudinale L. La glissière 26 est par exemple surélevée par rapport au reste du support de sorte à ce que, en position fixée du chemin de câble(s) 12, le chemin de câble(s) 12 est en contact avec la glissière 26.

La glissière 26 présente, dans une section perpendiculaire à la direction longitudinale L, une base 28 plane sensiblement perpendiculaire à la direction verticale V. La glissière 26 définit également des côtés 30, s'étendant depuis la base 28 selon une géométrie évasée. Autrement dit, la base 28 et les côtés 30 forment selon la section perpendiculaire à la direction longitudinale L, une forme de V tronqué à sa base.

En outre, la glissière 26 définit deux pattes 32, s'étendant chacune depuis une extrémité d'un côté 30 respectif, ladite extrémité étant éloignée de la base 28. Chaque patte 32 s'étend parallèlement à la base 28 vers l'intérieur de la glissière 26. Le support définit donc une ouverture 34, formée par les pattes 32, s'étendant selon la direction longitudinale L et débouchant dans la glissière 26. En position fixée du chemin de câble(s) 12, le chemin de câble(s) 12 est en contact avec le support 14, via les pattes 32.

Le dispositif de fixation 15 comprend par exemple une vis 36 et un plot 38. Le plot 38 comprend par exemple un réceptacle taraudé (non-représenté) adapté pour recevoir la vis 36. Le plot 38 est en outre adapté pour être inséré dans la glissière 26. Le plot 38 définit par exemple une géométrie sensiblement parallélépipédique dont une largeur est supérieure à la largeur de l'ouverture 34. Ainsi, lorsque le plot 38 est inséré dans la glissière, il est bloqué en translation selon la direction verticale V et ne peut pas être extrait par l'ouverture 34 de la glissière 26.

En position fixée du chemin de câble(s) 12, le plot 38 est préférentiellement inséré dans la glissière 26 et la vis 36 est reçue par le plot 38, la vis 36 traversant l'ouverture 34 de la glissière 26. Préférentiellement, la vis 36 traverse l'ouverture 34 et un des orifices 22 du chemin de câble(s) 12, bloquant ainsi la translation du plot 38 selon la direction longitudinale L.

Le dispositif de fixation 15 comprend en outre un organe de blocage 40. L'organe de blocage 40 est par exemple une tête de la vis 36 ou un écrou vissé sur la vis 36. En position fixée du chemin de câble(s) 12, le support 14 et le chemin de câble(s) 12 sont enserrés entre le plot 38 et l'organe de blocage 40, bloquant ainsi une translation du chemin de câble(s) 12 et du support 14, l'un par rapport à l'autre, selon la direction verticale V.

En complément facultatif, le dispositif de fixation 15 comprend un organe d'ajustement 42. L'organe d'ajustement 42 est propre à être inséré dans la glissière 26. Lorsque l'organe d'ajustement 42 est inséré dans la glissière 26, il épouse, au moins partiellement, la forme de la base 28 et les côtés 30 de la glissière 26. Optionnellement, l'organe d'ajustement 42 définit en outre deux marches 44 destinées à recevoir le plot 38. En position fixée du chemin de câble(s) 12, le plot 38 est en appui sur l'organe d'ajustement 42, et plus spécifiquement sur les marches 44 de l'organe d'ajustement 42.

Le dispositif de fixation 15 comprend en outre par exemple deux rondelles 46, telles que des rondelles Belleville et/ou des rondelles de freinage, destinées à être montées entre le chemin de câble(s) 12 et l'organe de blocage 40.

L'ensemble comprend préférentiellement au moins trois dispositifs de fixation 15 pour assurer une bonne fixation du chemin de câble(s) 12 sur le support 14.

Le montage du chemin de câble(s) 12 par rapport à support 14 va maintenant être décrit.

Initialement, le chemin de câble(s) 12 est en position écartée.

L'organe d'ajustement 42 est optionnellement inséré dans la glissière 26. Puis, le plot 38 est également inséré dans la glissière 26, en appui sur l'organe d'ajustement 42.

Le chemin de câble(s) 12 est ensuite positionné par rapport au support 14 de sorte à ce que le réceptacle taraudé du plot 38 soit en vis-à-vis d'un orifice 22 du chemin de câble(s) 12.

Optionnellement, les rondelles 46 sont positionnées sur le chemin de câble(s) 12, contre l'orifice 22 en vis-à-vis du réceptacle taraudé du plot 38.

La vis 36 est ensuite insérée dans l'orifice, le cas échéant à travers les rondelles 46, jusqu'à atteindre le réceptacle taraudé du plot 38. La vis 36 est ensuite vissée dans le réceptacle taraudé du plot 38.

Lorsque l'organe de blocage 40 est un écrou, il est vissé sur la vis 36 jusqu'à venir en contact avec le chemin de câble(s) 12 ou, le cas échéant avec les rondelles 46. L'écrou est vissé de sorte que le chemin de câble(s) 12 et les pâtes 32 du support 14 soient enserrés entre le plot 38 et ledit écrou.

Lorsque l'organe de blocage 40 est la tête de la vis 36, la vis 36 est vissée dans le réceptacle taraudé, jusqu'à ce que le chemin de câble(s) 12 et les pâtes 32 du support 14 soient enserrés entre le plot 38 et ladite tête de vis. La tête de vis étant alors en contact avec le chemin de câble(s) 12 ou, le cas échéant avec les rondelles 46.

Le chemin de câble(s) 12 est alors en position fixée.

Le chemin de câble(s) 12 selon l'invention permet de ne pas avoir à utiliser de tresse de mise à la terre pour maintenir un potentiel égal entre le support 14 et le chemin de câble(s). Ainsi, en l'absence de tresse, le risque de vol de cet élément est nul permettant une réduction substantielle du nombre d'opérations de maintenance.

En outre, le dispositif de fixation 15 selon l'invention assure un bon contact entre le chemin de câble(s) 12 et le support 14, en position fixée du chemin de câble(s) 12, permettant de maintenir ledit chemin de câble(s) 12 et le support 14 à des potentiels égaux.

## Revendications

1. Ensemble comprenant un chemin de câble(s) (12) pour un véhicule, notamment ferroviaire, un support (14) et au moins un dispositif de fixation (15) du chemin de câble(s) (12), le chemin de câble(s) (12) étant propre à être fixé au support (14) pour conduire un ensemble de câble(s) électrique(s) (16) entre le support (14) et le chemin de câble(s) (12), le chemin de câble(s) (12) comportant un revêtement en un alliage comprenant du zinc, de l'aluminium et du magnésium,
le chemin de câble(s) (12) étant mobile par rapport au support (14) entre :
- une position fixée dans laquelle le chemin de câble(s) (12) est fixé au support (14) par le dispositif de fixation (15), et
- une position écartée dans laquelle le chemin de câble(s) (12) est écarté du support (14),
dans lequel le support (14) définit une glissière (26) s'étendant selon une direction longitudinale (L), le support (14) définissant en outre une ouverture (34) s'étendant selon la direction longitudinale (L) et débouchant dans la glissière (26),
le dispositif de fixation (15) comprenant une vis (36) et un plot (38), le plot (38) étant adapté pour recevoir la vis (36), et,
en position fixée du chemin de câble(s) (12), le plot (38) étant inséré dans la glissière (26) et la vis (36) étant reçu par le plot (38), la vis (36) traversant l'ouverture (34) de la glissière (26).

2. Ensemble selon la revendication 1, dans lequel l'alliage comprend :
- un pourcentage massique de zinc supérieur à 90%,
- préférentiellement un pourcentage massique d'aluminium compris entre 1% et 5%, et
- préférentiellement un pourcentage massique de magnésium compris entre 1% et 5%.

3. Ensemble (10) selon la revendication 1 ou 2, dans lequel en position fixée de chemin de câble(s) (12), le chemin de câble(s) (12) et le support (14) sont en contact.

4. Ensemble selon l'une quelconque des revendications 1 à 3, dans lequel le support (14) est en acier inoxydable.

5. Ensemble (10) selon l'une quelconque des revendications précédentes, dans lequel le dispositif de fixation (15) comprend en outre un organe de blocage (40), et, en position fixée du chemin de câble(s) (12), le support (14) et le chemin de câble(s) (12) sont enserrés entre le plot (38) et l'organe de blocage (40).

6. Ensemble (10) selon la revendication 5, dans lequel le dispositif de fixation (15) comprend en outre un organe d'ajustement (42), propre à être inséré dans la glissière (26), en position fixée du chemin de câble(s) (12), le plot (38) étant en appui sur l'organe d'ajustement (42) dans la glissière (26).

7. Ensemble (10) selon l'une quelconque des revendications précédentes, dans lequel le chemin de câble(s) (12) comprend au moins un orifice (22), et,
en position fixée du chemin de câble(s) (12), la vis (36) traverse le ou l'un des orifices (22).

8. Ensemble (10) selon l'une quelconque des revendications précédentes, dans lequel le support (14) est un plancher d'une cabine machine d'un véhicule ferroviaire.

## Patentansprüche

1. Anordnung, umfassend einen Kabelkanal (12) für ein Fahrzeug, insbesondere ein Schienenfahrzeug, einen Träger (14) und wenigstens eine Befestigungsvorrichtung (15) für den Kabelkanal (12), wobei der Kabelkanal(n) (12) dazu geeignet ist, an dem Träger (14) festgelegt zu werden, um eine elektrische Kabelanordnung (16) zwischen dem Träger (14) und dem Kabelkanal (12) zu führen, wobei der Kabelkanal (12) eine Beschichtung aus einer Legierung aus Zink, Aluminium und Magnesium umfasst,
wobei der Kabelkanal (12) relativ zum Träger (14) beweglich ist zwischen:
- einer festgelegten Position, in der der Kabelkanal (12) durch die Befestigungsvorrichtung (15) an dem Träger (14) festgelegt ist, und
- einer entfernten Position, in der der Kabelkanal (12) von dem Träger (14) entfernt ist,
wobei der Träger (14) eine Führung (26) definiert, die sich in Längsrichtung (L) erstreckt, wobei der Träger (14) ferner eine Öffnung (34) definiert, die sich in Längsrichtung (L) erstreckt und in die Führung (26) mündet,
wobei die Befestigungsvorrichtung (15) eine Schraube (36) und einen Stift (38) umfasst, wobei der Stift (38) zur Aufnahme der Schraube (36) geeignet ist, und in der festgelegten Position des Kabelkanals (12) der Stift (38) in die Führung (26) eingesetzt ist und die Schraube (36) vom Stift (38) aufgenommen ist, wobei die Schraube (36) die Öffnung (34) der Führung (26) durchdringt.

2. Anordnung nach Anspruch 1, wobei die Legierung umfasst:
- einen Massenanteil an Zink von mehr als 90 %,
- bevorzugt einen Massenanteil an Aluminium zwischen 1 % und 5 % und
- bevorzugt einen Massenanteil an Magnesium zwischen 1 % und 5 %.

3. Anordnung (10) nach Anspruch 1 oder 2, wobei in der festgelegten Position des Kabelkanals (12) der Kabelkanal (12) und der Träger (14) in Kontakt stehen.

4. Anordnung nach einem der Ansprüche 1 bis 3, wobei der Träger (14) aus rostfreiem Stahl besteht.

5. Anordnung (10) nach einem der vorstehenden Ansprüche, wobei die Befestigungsvorrichtung (15) ferner ein Verriegelungselement (40) umfasst und in der festgelegten Position des Kabelkanals (12) der Träger (14) und der Kabelkanal (12) zwischen dem Stift (38) und dem Verriegelungselement (40) eingeklemmt sind.

6. Anordnung (10) nach Anspruch 5, wobei die Befestigungsvorrichtung (15) ferner ein Einstellelement (42) umfasst, welches dazu geeignet ist, in einer festgelegten Position des Kabelkanals in die Führung (26) eingesetzt zu werden, wobei der Stift (38) in der Führung (26) an dem Einstellelement (42) anliegt.

7. Anordnung (10) nach einem der vorstehenden Ansprüche, wobei der Kabelkanal (12) wenigstens eine Öffnung (22) aufweist und in der festgelegten Position des Kabelkanals (12) die Schraube (36) die oder eine der Öffnungen (22) durchdringt.

8. Anordnung (10) nach einem der vorstehenden Ansprüche, wobei der Träger (14) ein Boden einer Maschinenkabine eines Schienenfahrzeugs ist.

## Claims

1. An assembly comprising a cable tray (12) for a vehicle, especially a railway vehicle, a support (14) and at least one device (15) for fastening the cable tray (12), the cable tray (12) being suitable for being fastened to the support (14) to carry a set of electrical cable(s) (16) between the support (14) and the cable tray (12), the cable tray (12) including a coating of an alloy comprising zinc, aluminium and magnesium,
the cable tray (12) being movable with respect to the support (14) between:
- a fastened position in which the cable tray (12) is fastened to the support (14) by the fastening device (15), and
- a moved apart position in which the cable tray (12) is moved apart from the support (14),
wherein the support (14) defines a rail (26) extending along a longitudinal direction (L), the support (14) further defining an opening (34) extending along the longitudinal direction (L) and opening into the rail (26),
the fastening device (15) comprising a screw (36) and a stud (38), the stud (38) being adapted to receive the screw (36), and, in the fastened position of the cable tray (12), the stud (38) being inserted into the rail (26) and the screw (36) being received by the stud (38), the screw (36) passing through the opening (34) of the rail (26).

2. The assembly according to claim 1, wherein the alloy comprises:
- a weight percentage of zinc greater than 90%,
- preferably a weight percentage of aluminium of between 1% and 5%, and
- preferably a weight percentage of magnesium of between 1% and 5%.

3. The assembly (10) according to claim 1 or 2, wherein in the fastened position of the cable tray (12), the cable tray (12) and the support (14) are in contact.

4. The assembly according to any of claims 1 to 3, wherein the support (14) is of stainless steel.

5. The assembly (10) according to any of the preceding claims, wherein the fastening device (15) further comprises a blocking member (40), and, in the fastened position of the cable tray (12), the support (14) and the cable tray (12) are sandwiched between the stud (38) and the blocking member (40).

6. The assembly (10) according to claim 5, wherein the fastening device (15) further comprises an adjusting member (42), suitable for being inserted into the rail (26), in the fastened position of the cable tray (12), the stud (38) bearing onto the adjusting member (42) in the rail (26).

7. The assembly (10) according to any of the preceding claims, wherein the cable tray (12) comprises at least one aperture (22), and, in the fastened position of the cable tray (12), the screw (36) passes through the or one of the apertures (22).

8. The assembly (10) according to any of the preceding claims, wherein the support (14) is a floor of a machine compartment of a railway vehicle.
